(19) Europäisches Patentamt / European Patent Office / Office européen des brevets

(11) **EP 3 305 086 A1**

(12) **EUROPEAN PATENT APPLICATION**
published in accordance with Art. 153(4) EPC

(43) Date of publication:
**11.04.2018 Bulletin 2018/15**

(51) Int Cl.:
*A23G 1/00* (2006.01)　　*A23G 1/30* (2006.01)
*A23L 33/10* (2016.01)

(21) Application number: **16802806.6**

(22) Date of filing: **31.05.2016**

(86) International application number:
**PCT/JP2016/002626**

(87) International publication number:
**WO 2016/194366 (08.12.2016 Gazette 2016/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.06.2015 JP 2015111706**

(71) Applicants:
• **Lotte Co., Ltd.**
**Tokyo 160-0023 (JP)**
• **Nitto Pharmaceutical Industries, Ltd.**
**Muko-shi, Kyoto 617-0006 (JP)**

(72) Inventors:
• **ASHITANI, Hiroaki**
**Saitama-shi**
**Saitama 336-0027 (JP)**
• **KOYAMA, Toshiyuki**
**Saitama-shi**
**Saitama 336-0027 (JP)**

• **USAMIKRANK, Yoko**
**Saitama-shi**
**Saitama 336-0027 (JP)**
• **ISHIZUKA, Tomokazu**
**Saitama-shi**
**Saitama 336-0027 (JP)**
• **TADOKORO, Keiji**
**Saitama-shi**
**Saitama 336-0027 (JP)**
• **KABUKI, Yusuke**
**Saitama-shi**
**Saitama 336-0027 (JP)**
• **YONEJIMA, Yasunori**
**Muko-shi**
**Kyoto 617-0006 (JP)**
• **HISA, Keiko**
**Muko-shi**
**Kyoto 617-0006 (JP)**

(74) Representative: **Hartz, Nikolai**
**Wächtershäuser & Hartz**
**Patentanwaltspartnerschaft mbB**
**Weinstrasse 8**
**80333 München (DE)**

(54) **LACTIC ACID BACTERIUM-CONTAINING FAT OR OIL COMPOSITION AND METHOD FOR MANUFACTURING SAME**

(57)　By adding a viable lactic acid bacterium to a fat or oil composition, the present invention has succeeded in producing a lactic acid bacterium-containing fat or oil composition that has a high viability of the lactic acid bacterium and an excellent resistance to acids. By adding lactic acid bacteria powder or a chocolate with a high lactic acid bacterium concentration to a chocolate dough after tempering and before molding, moreover, the present invention has succeeded in producing a lactic acid bacterium-containing chocolate including a viable lactic acid bacterium by a simple producing method. Thus, provided is a lactic acid bacterium-containing chocolate with high palatability that contains a viable lactic acid bacterium.

## Description

## Technical Field

The present invention relates to a lactic acid bacterium-containing fat or oil composition containing a viable lactic acid bacterium and a method for manufacturing the same.

## Background Art

A lactic acid bacterium is a bacterium that produces lactic acid from sugars. As a bacterium producing lactic acid from sugars by fermentation(lactic acid fermentation), the genera Lactobacillus, Enterococcus, Lactococcus, Pediococcus, Leuconostoc, etc. are known. Bifidobacterium is also known as a bacterium that decomposes sugars to produce lactic acid and acetic acid. Bacteria of the genus Bifidobacterium may be classified as Bacillus bifidus separately from lactic acid bacteria, but in the present specification, bacteria of the genus Bifidobacterium are also included in lactic acid bacteria.

Many kinds of microorganisms live in the human intestine, and lactic acid bacteria belonging to the genera Lactobacillus and Bifidobacterium are detected from almost all human intestines.

Probiotics have been defined by a British microbiologist Fuller as "living microorganisms that bring beneficial effects to humans by improving the balance of the intestinal flora", and it is preferable that such probiotics reach the intestine in a living state and can grow in the intestinal environment. Some of lactic acid bacteria regulate the immune system, endocrine system, nervous system and the like, in addition to the regulation of the intestinal flora, and are attracting attention as probiotics.

It is desirable to ingest lactic acid bacteria for health promotion and maintenance. Yogurt, lactic acid bacteria beverages, etc. are common as foods containing lactic acid bacteria. In addition to these, lactic acid bacterium-containing foods as a probiotic that is more convenient and more palatable meet the needs of modern people seeking all of health, convenience and palatability.

Patent Literature 1 discloses a chocolate containing lactic acid bacteria including viable Bacillus bifidus, but discloses a technique for improving stability from the time of manufacturing. This technique does not improve the survival rate of lactic acid bacteria in the manufacturing process and the survival rate of lactic acid bacteria in digestion and absorption after ingestion.

In general, lactic acid bacteria are damaged by gastric acid when ingested from the mouth, so that the number of bacteria reaching the intestines in a living state dramatically decreases as compared with the number of bacteria when ingested. For that reason, pharmaceutical products are designed to reach the intestines in a living state by setting to take them after meals or after formulating them into an enteric preparation, thereby to enhance the effectiveness of probiotics. However, in foods, administration and dosage like pharmaceuticals cannot be set and more palatability is required for foods.

Patent Literature 2 discloses a method for producing a stable viable bacterial preparation characterized by suspending a dry powder containing viable bacteria having an intestinal action in a fat or oil. However, the obtained viable bacterial preparation must be packed in bottles, tubes, etc. or filled in soft capsules for use, and the number of viable bacteria is greatly decreased after long-term storage at room temperature. Patent Literature 3 discloses a lactic acid bacterium-containing tablet prepared by mixing a viable lactic acid bacterium-containing powder with a specific type of additive and coating the tablet with an enteric substance such as hydroxymethyl cellulose, Patent Literature 4 discloses an enteric particle obtained by coating a lactic acid bacterium-containing particle with a layer containing a fat or oil and an excipient, a layer containing a hydrous alcohol soluble protein such as zein, and a layer containing a sugar, Patent Literature 5 discloses an immunopotentiator characterized by enclosing lactic acid bacterial cells in an enteric capsule obtained by combining gelatin with pectin, alginic acid, cellulose or the like, and Patent Literature 6 discloses enteric coated granules produced by coating a seed containing lactic acid bacteria with a water miscible coating base such as sodium alginate. However, the manufacturing process in any case mentioned above is complicated and lacks in handiness. Patent Literature 7 discloses an enteric composition of lactic acid bacteria, characterized by containing a lactic acid bacterial cell powder and a polyglycerol fatty acid ester. However, as the result of a test using an artificial digestive juice, it was found that the number of viable lactic acid bacteria was low.

Among lactic acid bacteria, it is known that Lactobacillus brevis, Lactobacillus acidophilus, Lactobacillus gasseri, Enterococcus faecalis, Bifidobacterium longum, or Leuconostoc mesenteroides is expected to be used for manufacturing dairy products such as yoghurt and to exhibit health promoting effect. In the Lactobacillus brevis, Lactobacillus brevis subsp. coagulans (commonly referred to as "Labre bacteria") and the like are known for use in such a purpose. In addition, it is said that Lactobacillus brevis has an immunostimulating action and anti-influenza virus activity, as well as an effect of suppressing increase in body weight, liver fat weight, and blood cholesterol, etc. and thus Lactobacillus brevis is a lactic acid bacterium that can expect various health effects.

Leuconostoc mesenteroides is a lactic acid bacterium that has an immunostimulating action and can expect health effects. Lactobacillus acidophilus, Lactobacillus gasseri, Enterococcus faecalis or Bifidobacterium longum are all used for manufacturing dairy products such as yoghurt and are expected to exert a health promoting effect.

**Citation List**

**Patent Literature**

PTL 1: Japanese Patent Application Laid-Open No. H08-126473
PTL 2: Japanese Patent Application Laid-Open No. S56-002908
PTL 3: Japanese Patent Application Laid-Open No. H04-041434
PTL 4: Japanese Patent Application Laid-Open No. H05-186335
PTL 5: Japanese Patent Application Laid-Open No. H11-199494
PTL 6: Japanese Patent Application Laid-Open No. 2002-505251
PTL 7: Japanese Patent Application Laid-Open No. 2001-064189

**Non-Patent Literature**

NPL 1: Nippon Shokuhin Kagaku Kogaku Kaishi 48(9) pp. 656-663 (2001)

**Summary of Invention**

**Technical Problem**

An object of the present invention is to provide a food that can easily and deliciously ingest lactic acid bacteria in a living state and is useful for improving health and a method for manufacturing the same.

Solution to Problem

An excellent lactic acid bacterium-containing fat or oil composition with a high survival rate of lactic acid bacteria and high acid resistance has been successfully manufactured by adding lactic acid bacteria in a living state to a fat or oil composition.

Further, by adding lactic acid bacteria powder to a chocolate dough after tempering and before molding, a lactic acid bacterium-containing chocolate containing viable lactic acid bacteria has been successfully produced. Thus, the lactic acid bacterium-containing chocolate containing viable lactic acid bacteria is provided.

**Advantageous Effects of Invention**

In the present invention, we succeeded in manufacturing a lactic acid bacterium-containing fat or oil composition having an extremely high survival rate of lactic acid bacteria for the first time. Surprisingly, the lactic acid bacterium-containing fat or oil composition of the present invention has a higher survival rate of lactic acid bacteria than the survival rate of lactic acid bacteria when ingesting lactic acid bacteria with yogurt or the like, and easily reaches the intestines while lactic acid bacteria are alive. As lactic acid bacteria usually die in the gastric acid for 30 minutes, most lactic acid bacteria die in the stomach even if yoghurt etc. are taken. However, the lactic acid bacteria in the lactic acid bacterium-containing fat or oil composition of the present invention survive even in the gastric acid. Therefore, when ingesting the lactic acid bacterium-containing fat or oil composition of the present invention, a lot of lactic acid bacteria can reach the intestines while they are alive.

Furthermore, it was surprisingly found that the lactic acid bacterium-containing fat or oil composition of the present invention has a very long expiration date of 1 year at normal temperature, and not less than 70% of the lactic acid bacteria survive even after 1 year. Meanwhile, yogurt and lactic acid bacteria beverages etc. are refrigerated and the expiration date is about 2 weeks. Therefore, the lactic acid bacterium-containing fat or oil composition of the present invention is also advantageous in distribution, such as preservation, transportation and display of stores, and is easy to be liked throughout the year.

**Brief Description of Drawings**

Fig. 1 is a diagram for illustrating a method for manufacturing a lactic acid bacterium-containing chocolate.
Fig. 2 is a diagram for illustrating a method for manufacturing a lactic acid bacterium-containing almond chocolate.
Fig. 3 is a diagram for illustrating a method for manufacturing a lactic acid bacterium-containing fat or oil composition.
Figs. 4A, 4B and 4C are graphs showing the results of a resistance test of a lactic acid bacterium-containing chocolate against artificial gastric juice.
Fig. 5 is a graph showing the results of a resistance test of a lactic acid bacterium-containing chocolate and a lactic acid bacteria powder against artificial gastric juice.

**Description of Embodiments**

One embodiment of the present invention is a lactic acid bacterium-containing fat or oil composition containing a viable lactic acid bacterium. The lactic acid bacterium-containing fat or oil composition contains preferably $1 \times 10^4$ viable lactic acid bacteria/g or more, more preferably from $1 \times 10^4$ viable lactic acid bacteria/g to $1 \times 10^{12}$ viable lactic acid bacteria/g, still more preferably from $1 \times 10^6$ viable lactic acid bacteria/g to $1 \times 10^{12}$ viable lactic acid bacteria/g, even more preferably from $1 \times 10^7$ viable lactic acid bacteria/g to $1 \times 10^{12}$ viable lactic acid bacteria/g, and furthermore preferably from $4 \times 10^7$ viable lactic acid bacteria/g to $1 \times 10^{12}$ viable lactic acid bacteria/g.

Examples of lactic acid bacteria include the genus Lactobacillus (e.g. Lactobacillus brevis, Lactobacillus casei Shirota, Lactobacillus acidophilus L-92, Lactobacillus cremoris, Lactobacillus helveticus, Lactobacillus salivarius, Lactobacillus gasseri OLL 2716, Lactobacillus gasseri PA-3, Lactobacillus gasseri SBT 2055, Lactobacillus bulgaricus OLL1073R-1, Lactobacillus fermentum, Lactobacillus reuteri, Lactobacillus crispatus, Lactobacillus yogurti, Lactobacillus delbrueckii subspecies bulgaricus 2038, Lactobacillus delbrueckii subspecies delbrueckii, Lactobacillus johnsonii, Lactobacillus plantarum, etc.), the genus Streptococcus (e.g. Streptococcus thermophilus 1131, etc.), the genus Bifidobacterium (e.g. Bifidobacterium longum BB 536, Bifidobacterium longum SBT 2928, Bifidobacterium lactis GCL 2505, Bifidobacterium breve, Bifidobacterium infantis, Bifidobacterium adolescentis, Bifidobacterium bifidum, Bifidobacterium catenulatum, Bifidobacterium pseudocatenulatum, Bifidobacterium angulatum, Bifidobacterium gallicum, Bifidobacterium animalis, etc.), the genus Enterococcus (e.g. Enterococcus faecalis, Enterococcus faecium, Enterococcus hirae, etc.), the genus Lactococcus (e.g. Lactococcus lactis subsp. lactis, Lactococcus lactis subspecies cremoris, Lactococcus plantarum, Lactococcus raffinolactis, etc.), the genus Pediococcus (e.g. Pediococcus pentosaceus, Pediococcus damnosus, etc.), and the genus Leuconostoc (e.g. Leuconostoc dextranicum, Leuconostoc citrovorum, Leuconostoc mesenteroides, Leuconostoc lactis, etc.), and the like.

Among them, Lactobacillus, Bifidobacterium, Enterococcus, and Leuconostoc are preferred as lactic acid bacteria in the present invention, and Lactobacillus brevis, Lactobacillus acidophilus, Lactobacillus gasseri, Enterococcus faecalis, Bifidobacterium longum, and Leuconostoc mesenteroides are more preferable, but the bacteria are not limited to those mentioned above as long as they are a bacterium that produces lactic acid.

The fat or oil composition in the present invention refers to a composition mainly composed of fats and oils, and the fat or oil is contained in 20 to 99%, more preferably 30 to 60% of the whole composition. The fat or oil composition may be produced by using, as necessary, raw materials including sugar, cacao-derived raw material, milk-derived raw material, flavor, emulsifier and the like in addition to the fat or oil, and optionally pulverizing, mixing and solidifying these raw materials.

Examples of the lactic acid bacterium-containing fat or oil composition of the present invention include chocolate, glaze, whipped cream, sandwich cream, butter cream, filling, and the like, and chocolate is particularly preferable. In the present specification, chocolate is not limited to those defined in the convention (fair competition convention concerning the display of chocolate) or the regulations prescribed by laws, but chocolate is mainly composed of raw materials derived from cacao and, if necessary, saccharides, dairy products, other edible fats and oils, flavors, emulsifiers etc. In the present specification, chocolate or chocolate confectionery means general chocolate flavored confectioneries including dark chocolate, milk chocolate, white chocolate, color chocolate with desired color based on white chocolate, chocolate confectionery including these, and the like.

One embodiment of the present invention is a food containing the lactic acid bacterium-containing fat or oil composition of the present invention. Examples thereof include chocolate confectionery containing lactic acid bacteria plus fruits, nuts, cereals, gummies, candies and the like, baked confectionery including lactic acid bacterium-containing fat or oil composition, snack confections, cookies, cakes, ice creams, beverages, and the like.

One embodiment of the present invention is a lactic acid bacterium-containing fat or oil composition containing a center material. In the present embodiment, the center material is coated with a lactic acid bacterium-containing fat or oil composition. As the center material, fruits, nuts, cereals, gummies, candies and the like can be used.

One embodiment of the present invention is a method for manufacturing a lactic acid bacterium-containing chocolate, including adding a lactic acid bacteria powder to a chocolate dough after tempering and before molding.

In the manufacturing method of a lactic acid bacterium-containing chocolate, the temperature of the chocolate dough is preferably from 27°C to 31°C, more preferably from 28°C to 30°C when adding lactic acid bacteria powder.

In the present embodiment, a chocolate with a high lactic acid bacterium concentration is manufactured by mixing a high concentration of lactic acid bacteria powder with a chocolate, and then the chocolate with a high lactic acid bacterium concentration can be added to a chocolate dough after tempering and before molding. In this case, when the chocolate with a high lactic acid bacterium concentration is added, the temperature of the chocolate dough before molding is preferably from 27°C to 31°C, more preferably from 28°C to 30°C. If the temperature is less than 27°C, the chocolate dough will solidify, and if the temperature exceeds 31°C, the crystal structure due to tempering will be broken and the quality cannot be maintained.

However, the method of the above embodiment is suitable for manufacturing a lactic acid bacterium-containing chocolate that is a type to be molded. As a further embodiment of the present invention, there is provided a method for manufacturing a lactic acid bacterium-containing chocolate wherein a center material is coated. Since no tempering is carried out in manufacturing the center material-coated chocolate, a further embodiment of the invention provides a method for manufacturing the center material-coated lactic acid bacterium-containing chocolate, including adding a lactic acid bacteria powder to a chocolate dough that has been adjusted to 35°C to 40°C, thereby to coat the center material.

Example

Example 1 Lactic Acid Bacterium-Containing Chocolate (Labre bacterium)

1. Preparation of Lactic Acid Bacteria Powder Lactobacillus brevis subsp. coagulans (Labre bacterium) belonging to Lactobacillus brevis was used as lactic acid bacteria powder. The Labre bacterium was cultured using a commonly used lactic acid bacterium culture medium (MRS medium etc.), and the cultured bacteria were collected by centrifugation or the like, freeze-dried, pulverized, etc. to obtain a powder, to which starch was added to give lactic acid bacteria powder. The lactic acid bacteria powder contains preferably from $1 \times 10^5$ viable lactic acid bacteria/g to $1 \times 10^{13}$ viable lactic acid bacteria/g, more preferably from $1 \times 10^7$ viable lactic acid bacteria/g to $1 \times 10^{13}$ viable lactic acid bacteria/g, and even more preferably from $1 \times 10^8$ viable lactic acid bacteria/g to $1 \times 10^{13}$ viable lactic acid bacteria/g.

2. Manufacturing of Lactic Acid Bacterium-Containing Chocolate

Generally, chocolate is obtained by selecting, separating, roasting and grinding cacao beans as a raw material to obtain cacao mass, mixing cacao mass, sugar, powdered milk, vegetable fat or oil, part of cocoa butter and part of emulsifier in a raw material mixer, atomizing the mixture by a refiner, subjecting the atomized product to a conching process, and adding a flavor, lactic acid bacteria powder and the remaining cocoa butter and emulsifier at the latter stage of conching to prepare a chocolate dough. In some cases, this chocolate dough is stored at about from 45°C to 50°C in a tank for about 4 days on average. This storage is a so-called waiting time caused by the operation of the manufacturing line. Thereafter, the dough is tempered at a temperature of about from 28°C to 30°C, then it is filled in a mold for molding, cooled/solidified, and unmolded to obtain a chocolate, which is packaged, inspected, and shipped after aging.

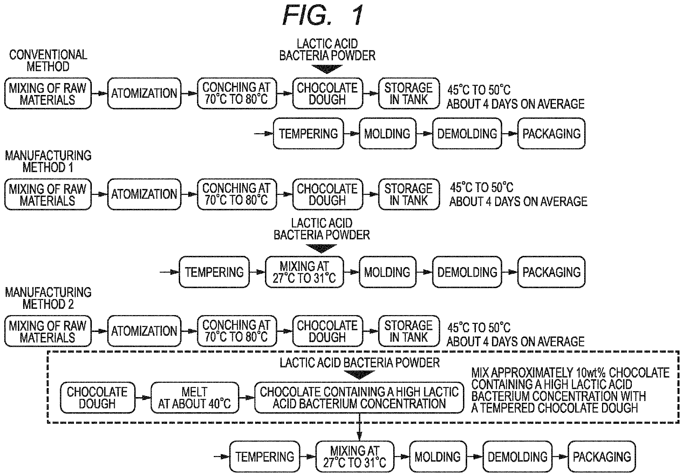

Based on this manufacturing method, a lactic acid bacterium-containing chocolate was produced by adding lactic acid bacteria powder by the conventional manufacturing method (lactic acid bacteria powder was added at the same timing as addition of flavor and the like), Manufacturing Method 1, and Manufacturing Method 2. The respective manufacturing methods are outlined in Fig. 1.

Conventional Manufacturing Method

Lactic acid bacteria powder was added to a chocolate dough which had reached 45 to 50°C after conching, and after 4 days storage, the dough was tempered, molded, etc.

Manufacturing Method 1

Lactic acid bacteria powder was added to a chocolate dough (27 to 31°C) for which tempering had been completed.

Manufacturing Method 2

A chocolate with a high lactic acid bacterium concentration was produced by melting in advance a chocolate dough at 40°C and adding a high concentration of lactic acid bacteria powder thereto. Incidentally, in the chocolate with a high lactic acid bacterium concentration, viable lactic acid bacteria are contained in an amount of preferably from $1 \times 10^5$ viable lactic acid bacteria/g to $1 \times 10^{12}$ viable lactic acid bacteria/g, more preferably from $1 \times 10^7$ viable lactic acid bacteria/g to $1 \times 10^{12}$ viable lactic acid bacteria/g, even more preferably from $1 \times 10^8$ viable lactic acid bacteria/g to $1 \times 10^{12}$ viable lactic acid bacteria/g. The chocolate dough after tempering was adjusted to 27°C to 31°C, and the chocolate with a high lactic acid bacterium concentration was added thereto and then mixed together.

In any of the manufacturing methods mentioned above, manufacturing was carried out according to the formulation of milk chocolate shown in Table 1.

[Table 1]

|  | % by weight |
|---|---|
| Cacao mass | 17 |
| Whole milk powder | 20 |
| Cocoa butter | 12 |
| Vegetable fat or oil | 10 |
| Sugar | 40 |
| Emulsifier | 0.4 |
| Flavor | 0.1 |
| Lactic acid bacteria powder | 0.5 |
| Total | 100 |

Even with any of the above-mentioned manufacturing methods, a lactic acid bacterium-containing chocolate could be produced. When Manufacturing Method 2 is used, this method is more preferred compared to the other methods from the viewpoint of manufacturing control since lactic acid bacteria can be prevented from being scattered and contaminated in the manufacturing line. In addition, according to Manufacturing Method 2, lactic acid bacteria can be uniformly mixed with a chocolate dough in a shorter time.

The blending of the lactic acid bacterium-containing chocolate may be carried out by adding, in addition to the lactic acid bacteria powder, other additives in the range of amounts being changed as appropriate, such as in a range of from 0 to 70% by weight of cacao mass, from 0 to 20% by weight of whole milk powder, from 0 to 25% by weight of cocoa butter, from 0 to 20% by weight of vegetable fat or oil, and 0 to 45% by weight of sugar. Further, auxiliary materials such as emulsifiers and flavors can be added as appropriate, and the blending amounts thereof can be appropriately adjusted. Furthermore, a dietary fiber in an amount of from 0 to 15% by weight and an oligosaccharide in an amount of from 0 to 10% by weight may be blended.

3. Resistance Test of Lactic Acid Bacterium-Containing Chocolate against Artificial Gastric Juice

Based on Manufacturing Method 2, a lactic acid bacterium-containing chocolate was prepared so that the content of lactic acid bacteria powder became 0.25% by weight. That is, only the content of the lactic acid bacteria powder was changed according to Table 1. Using the lactic acid bacterium-containing chocolate as a sample, a resistance test against artificial gastric juice was carried out based on the following procedure.
(1) An MRS medium adjusted to a predetermined pH and supplemented with 0.04% pepsin was used as an artificial gastric juice (according to Non-Patent Literature 1). The medium was 300 ml. The above artificial gastric juice was adjusted to pH 2.5 with a dilute hydrochloric acid. Since the main component of the stomach acid is hydrochloric acid, other acids are not used.
(2) One chocolate piece (2 grams) was soaked in an artificial gastric juice kept at 37°C, shaken to such a degree that the liquid surface gently ripples, and 1 ml of artificial gastric juice was taken after 30 minutes, 1 hour and 2 hours, after which time the number of viable bacteria contained therein was measured. The method of measuring the number of viable bacteria is carried out in the same manner as in the time course test on the number of viable bacteria in the lactic acid bacteria. It is to be noted that the maximum time is 2 hours because the time taken for the digestive substances in the stomach to be completely transferred to the duodenum is about 2 hours. In addition, as a control, experiments were similarly carried out on lactic acid bacterium-containing beverages which contain Labre bacteria by appropriately adjusting the added amount so that the number of viable bacteria at the time of addition into artificial gastric juice was about the same as that of lactic acid bacterium-containing chocolate.

(3) Results

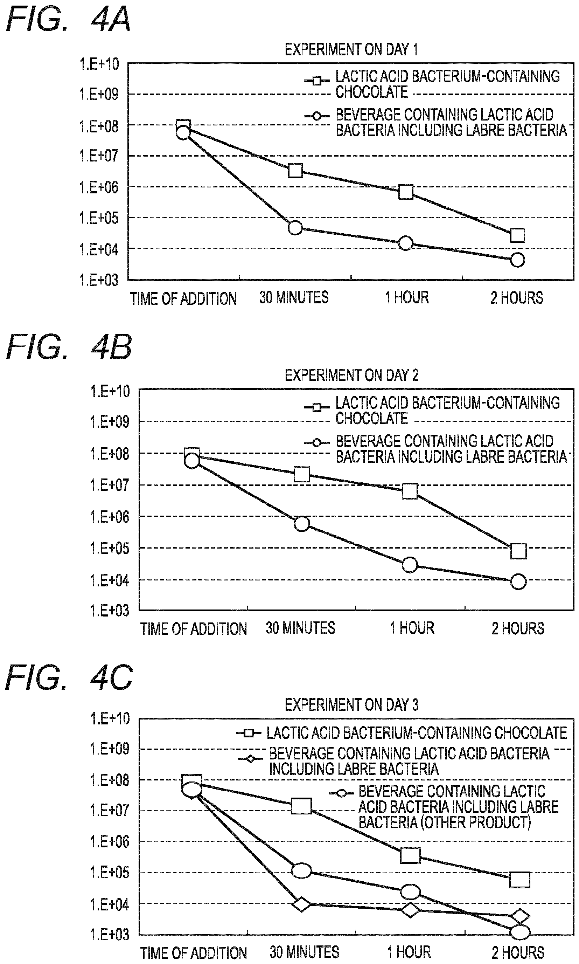

Since the same experiment was conducted three times at different dates and times, the results are shown in Table 2. These results are shown in the graphs of Figs. 4A-C. In the third experiment, two kinds of lactic acid bacterium-containing beverages containing Labre bacteria were used as a comparison control.

[Table 2]

| Results of experiment on day 1 | | | | |
|---|---|---|---|---|
| | At the time of addition | After 30 minutes | After 1 hour | After 2 hours |
| Lactic acid bacterium-containing chocolate | 8.62E +07 | 3.24E +06 | 6.90E +05 | 2.82E +04 |
| Beverage containing lactic acid bacteria including Labre bacteria | 5.60E +07 | 4.71E +04 | 1.47E +04 | 4.50E +03 |

| Results of experiment on day 2 | | | | |
|---|---|---|---|---|
| | At the time of addition | After 30 minutes | After 1 hour | After 2 hours |
| Lactic acid bacterium-containing chocolate | 8.62E +07 | 2.13E +07 | 6.18E +06 | 7.77E +04 |
| Beverage containing lactic acid bacteria including Labre bacteria | 5.60E +07 | 5.58E +05 | 2.88E +04 | 8.70E +03 |

| Results of experiment on day 3 | | | | |
|---|---|---|---|---|
| | At the time of addition | After 30 minutes | After 1 hour | After 2 hours |
| Lactic acid bacterium-containing chocolate | 8.62E +07 | 1.47E +07 | 3.81E +05 | 6.30E +04 |
| Beverage containing lactic acid bacteria including Labre bacteria | 4.25E +07 | 9.60E +03 | 6.30E +03 | 3.90E +03 |
| Beverage containing lactic acid bacteria including Labre bacteria (other product) | 5.00E +07 | 1.20E +05 | 2.46E +04 | 1.20E +03 |

From the results of the resistance test of the lactic acid bacterium-containing chocolate against artificial gastric juice, it was surprisingly found that the lactic acid bacterium-containing chocolate prepared by Manufacturing Method 2 has a very high survival rate of lactic acid bacteria in artificial gastric juice and its survival rate was much higher than that of the lactic acid bacterium-containing beverage as a comparison.

4. Comparative Resistance Test of Lactic Acid Bacterium-Containing Chocolate and Lactic Acid Bacteria Powder against Artificial Gastric Juice As with the artificial gastric juice resistance test of lactic acid bacterium-containing chocolate, an artificial gastric juice resistance test using a lactic acid bacterium-containing chocolate prepared so that the content of lactic acid bacteria powder becomes 0.25% by weight based on Manufacturing Method 2 and lactic acid bacteria powder itself was conducted in the same manner as in the artificial gastric juice resistance test of lactic acid bacterium-containing chocolate.

However, as a control, the lactic acid bacteria powder was appropriately adjusted so that the number of viable bacteria at the time of addition in the artificial gastric juice was approximately the same as that of the lactic acid bacterium-containing chocolate, and a similar experiment was conducted.

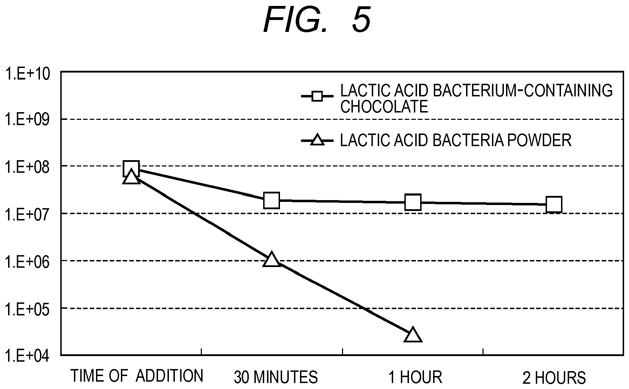

The results are shown in Table 3. Fig. 5 shows the graph of the results.

[Table 3]

|  | At the time of addition | After 30 minutes | After 1 hour | After 2 hours |
| --- | --- | --- | --- | --- |
| Lactic acid bacterium-containing chocolate | 8.75E+07 | 1.89E+07 | 1.71E+07 | 1.56E+07 |
| Lactic acid bacteria powder | 6.21E+07 | 1.10E+06 | 2.82E+04 | 0.00E+00 |

In the artificial gastric juice resistance test of this example, it was found that the survival rate of lactic acid bacteria at lapse of 30 minutes, 1 hour and 2 hours in the lactic acid bacterium-containing chocolate of the present invention, that is, the artificial gastric juice resistance of the lactic acid bacteria in the lactic acid bacterium-containing chocolate was much higher than that of the lactic acid bacteria powder.

5. Time Course Test on Number of Viable Lactic Acid Bacteria in Lactic Acid Bacterium-Containing Chocolate

In the same manner as in the artificial gastric juice resistance test of lactic acid bacterium-containing chocolate, a lactic acid bacterium-containing chocolate having the content of 0.25% by weight of lactic acid bacteria powder was prepared based on Manufacturing Method 2.

The number of viable lactic acid bacteria in a sample of a lactic acid bacterium-containing chocolate immediately after manufacturing, or in a sample stored for 1 month to 14 months at room temperature (about 18°C) was examined by the following method. A similar experiment was also conducted on a lactic acid bacterium-containing soft candy as a control.

(1) One fragment or about 1 g of a sample was taken, and the mass was precisely weighed. The sample was placed in a diluted liquid of 100 ml, shaken vigorously, and homogeneously suspended as a sample stock solution. 1 ml of the sample stock solution was added to 9 ml of the separately dispensed diluted solution and diluted 10-fold. The same operation was repeated to prepare a sample solution.

(2) An appropriate amount of 1 ml or less of the sample solution was dispensed into two petri dishes, and an MRS agar medium kept at 50°C was added thereto, mixed and then solidified.

(3) After the solidification, anaerobic cultivation was carried out at 35 to 37°C for 48 to 72 hours, and the number of colonies which appeared was counted to obtain an average colony number.

(4) The number of viable bacteria (CFU) in 1 g of the sample was calculated by the following calculation formula.

```
Number of viable bacteria (CFU/g) = Average number of
colonies (CFU) × Dilution factor × Sample stock
solution (ml)/Addition amount of sample solution
(ml)/Sampled amount (g)
```

(5) Results

The experiment was carried out at room temperature (about 18°C) and the results are shown in Table 4.

[Table 4]

|  | Immediately after manufacturing | After 1 month | After 2 months | After 6 months | After 12 months | After 14 months |
| --- | --- | --- | --- | --- | --- | --- |
| Number of viable bacteria (CFU/g) | 1.04E+08 | 1.16E+0 8 | 1.60E+0 8 | 9.08E+0 7 | 8.08E+0 7 | 6.62E+0 7 |
| Survival rate | 100% | 111% | 153% | 87% | 77% | 63% |

Regarding the lactic acid bacterium-containing soft candies, the time course test of the number of lactic acid bacteria was similarly examined, and the results were as shown in Table 5.

[Table 5]

|  | Immediately after manufacturing | After 1 month | After 2 months |
| --- | --- | --- | --- |
| Number of viable bacteria (CFU/g) | 2.18E+07 | 3.43E+03 | 5.95E+01 |

In the soft candy, most of the lactic acid bacteria were dead at one month after manufacturing and there were few viable bacteria after two months. It can be said that the survival rate is almost 0% in either 1 month or 2 months after manufacturing. In comparison, the lactic acid bacterium-containing chocolate could extremely stably maintain the viable bacterial state of lactic acid bacteria. Also, when looking at the results of samples after 14 months of manufacturing under room temperature (about 18°C), lactic acid bacteria are guaranteed to be alive for 1 year at room temperature because of good stability of lactic acid bacteria.

6. Comparison of Number of Lactic Acid Bacteria Contained in Lactic Acid Bacterium-Containing Chocolate Produced by Each Manufacturing Method

The number of lactic acid bacteria per gram of lactic acid bacterium-containing chocolates produced respectively by the conventional manufacturing method, Manufacturing Method 1, and Manufacturing Method 2 was measured. Table 6 shows the theoretical values of lactic acid bacteria calculated from the number of lactic acid bacteria contained in the added lactic acid bacteria powder and the measured values.

[Table 6]

|  | Conventional production method | Manufacturing method 1 | Manufacturing method 2 |
|---|---|---|---|
| Theoretical value (CFU/g) | 9.24E+07 | 9.24E+07 | 9.24E+07 |
| Measured value (CFU/g) | 2.40E+07 | 1.04E+08 | 9.88E+07 |

The number of lactic acid bacteria in the conventional manufacturing method decreased due to the inactivation of the bacteria by the producing process. In Manufacturing Method 1 and Manufacturing Method 2, it is possible to prevent inactivation in the process, and since the difference in the number of lactic acid bacteria is about 5 times as compared with the conventional manufacturing method, it can be said that Manufacturing Method 1 and Manufacturing Method 2 are each an excellent manufacturing method for increasing the number of viable bacteria reaching the intestine. With respect to the chocolate with a high lactic acid bacterium concentration of about $1.4 \times 10^9$ bacteria/g of the lactic acid bacteria powder produced in the process of Manufacturing Method 2, the number of viable lactic acid bacteria in the chocolate after allowed to stand at 45°C for 2 days was similarly measured. As a result, the number of viable lactic acid bacteria was about $1.3 \times 10^9$ bacteria/g, which was hardly changed when compared to about $1.4 \times 10^9$ bacteria/g. From this, it can be considered that the decrease in the number of lactic acid bacteria in the conventional manufacturing method is not simply due to heat, but it is considered that agitation for a long time during storage, a tempering operation or the like affects the decrease in the number of bacteria.

7. Resistance Test of Lactic Acid Bacterium-Containing Chocolate Produced by Each Manufacturing Method against Artificial Gastric Juice Using the lactic acid bacterium-containing chocolates prepared according to the conventional manufacturing method, Manufacturing Method 1, Manufacturing Method 2, a resistance test of a lactic acid bacterium-containing chocolate against artificial gastric juice was carried out in the same manner as in the resistance test of lactic acid bacterium-containing chocolate against artificial gastric juice.

Results

The results are expressed as survival rates in Table 7 when the number of bacteria at the time of manufacturing of each manufacturing method is defined as 100%, because the number of bacteria at the time of manufacturing varies depending on each manufacturing method.

[Table 7]

|  | Number of bacteria during manufacturing | After 30 minutes | After 1 hour | After 2 hours |
|---|---|---|---|---|
| Conventional method | 100% | 37.5% | 20.2% | 17.6% |
| Manufacturing method 1 | 100% | 33.3% | 29.6% | 23.1% |
| Manufacturing method 2 | 100% | 38.3% | 38.3% | 32.1% |

From the above results, it is surprisingly found that the lactic acid bacterium-containing chocolates prepared by Manufacturing Method 1 and Manufacturing Method 2 have a higher survival rate of lactic acid bacteria in the artificial gastric juice resistance test than the survival rate of the lactic acid bacterium-containing chocolate prepared by the conventional manufacturing method. Therefore, it was found that Manufacturing Method 1 and Manufacturing Method 2 are excellent manufacturing methods even in resistance to gastric acid.

As described above, from the results of this example, it was surprisingly found that the method for producing lactic acid bacterium-containing chocolate according to the present invention is a simple method, but is a very advantageous method to maintain the number of bacteria during manufacturing very high. Further, the lactic acid bacterium-containing chocolate obtained by a very excellent manufacturing method of the invention more resistant to gastric acid than lactic acid bacteria beverages and the like and further has higher acid resistance than lactic acid bacterium-containing chocolate produced by the conventional manufacturing method. In addition, it turned out that the lactic acid bacterium-containing chocolate produced by the manufacturing method of the invention is a chocolate which further enhances the effect of probiotics, and is a food with high palatability and high usefulness for maintaining health.

Example 2 Lactic Acid Bacterium-Containing Chocolate (Lactic Acid Bacteria Other Than Labre Bacteria)

1. Manufacturing of Lactic Acid Bacterium-Containing Chocolate

Using the formulation as shown in Table 1 lactic acid bacterium-containing chocolates were prepared according to Manufacturing Method 2 by changing the Labre bacteria with other lactic acid bacteria, namely Lactobacillus acidophilus, Lactobacillus gasseri, Enterococcus faecalis, Bifidobacterium longum, or Leuconostoc mesenteroides so that the lactic acid bacteria powder was 0.5% by weight in the case of Leuconostoc mesenteroides or 0.25% by weight in the case of the other 4 bacteria.

2. Time Course Test on Number of Viable Lactic Acid Bacteria in Lactic Acid Bacterium-Containing Chocolate

Regarding the produced lactic acid bacterium-containing chocolate, as with a time course test on the number of viable lactic acid bacteria in the lactic acid bacterium-containing chocolate of Example 1, the number of viable lactic acid bacteria in a sample of lactic acid bacterium-containing chocolate immediately after manufacturing or after stored at room temperature of about 18°C to about 25°C for 1 month to 3 months was examined. The results are shown in Table 8 below. It was found that the bacteria in the various bacteria-containing chocolates at 3 months after manufacturing could be maintained in an extremely stable and living state for various bacteria.

[Table 8]

|  | Immediately after manufacturing | After 1 month | After 2 months | After 3 months |
|---|---|---|---|---|
| Lactobacillus acidophilus | 4.43E+07 | 4.62E+07 | 6.00E+07 | 4.43E+07 |
| Lactobacillus gasseri | 5.88E+07 | 5.43E+07 | 7.52E+07 | 6.87E+07 |
| Enterococcus faecalis | 3.89E+07 | 3.56E+07 | 4.39E+07 | 3.45E+07 |
| Bifidobacterium longum | 4.66E+07 | 4.21E+07 | 4.32E+07 | 4.89E+07 |
| Leuconostoc mesenteroides | 1.28E+08 | 1.27E+08 | - | 1.22E+08 |

3. Resistance Test of Lactic Acid Bacterium-Containing Chocolate Against Artificial Gastric Juice

A resistance test of the produced lactic acid bacterium-containing chocolate against artificial gastric juice was carried in the same manner as in Example 1. In addition, as a control, experiments were also carried out similarly for each bacteria powder. The results are shown in Table 9 below. It was found that the resistance of the lactic acid bacteria in various bacteria-containing chocolate against artificial gastric juice was much higher when compared to the lactic acid bacteria powder.

[Table 9]

|  |  | At the time of addition | After 30 minutes | After 1 hour | After 2 hours |
|---|---|---|---|---|---|
| Lactobacillus acidophilus | Chocolate containing the bacteria | 1.02E+08 | 7.14E+07 | 4.32E+07 | 4.68E+07 |
|  | Bacteria powder | 6.67E+07 | 2.26E+07 | 1.69E+07 | 1.83E+07 |
| Lactobacillus gasseri | Chocolate containing the bacteria | 1.27E+08 | 5.43E+07 | 4.14E+07 | 6.24E+07 |
|  | Bacteria powder | 5.98E+07 | 1.33E+07 | 6.96E+06 | 6.90E+05 |

(continued)

|  |  | At the time of addition | After 30 minutes | After 1 hour | After 2 hours |
|---|---|---|---|---|---|
| Enterococcus faecalis | Chocolate containing the bacteria | 8.34E+07 | 7.86E+07 | 3.57E+07 | 3.00E+07 |
|  | Bacteria powder | 5.15E+07 | 0.00E+00 | 0.00E+00 | 0.00E+00 |
| Bifidobacterium longum | Chocolate containing the bacteria | 1.02E+08 | 3.18E+07 | 1.05E+07 | 9.30E+05 |
|  | Bacteria powder | 6.76E+07 | 0.00E+00 | 0.00E+00 | 0.00E+00 |
| Leuconostoc mesenteroides | Chocolate containing the bacteria | 5.42E+08 | 1.44E+08 | 7.20E+07 | 8.58E+07 |
|  | Bacteria powder | 5.08E+08 | 2.40E+03 | 0.00E+00 | 8.40E+03 |

Example 3 Lactic Acid Bacterium-Containing Almond Chocolate

1. Manufacturing of Lactic Acid Bacterium-Containing Almond Chocolate

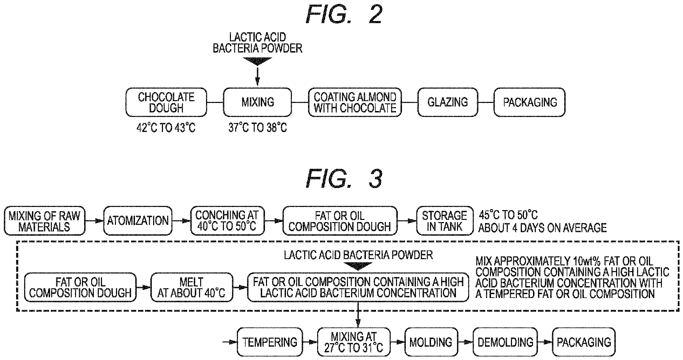

Labre bacteria were used as lactic acid bacteria, and Labre bacteria powder was prepared in the same manner as in Example 1. The blending ratio is as shown in Table 10 below. As the outline of the manufacturing method is shown in Fig. 2, lactic acid bacteria powder was added to a chocolate dough which was stored at 42°C to 43°C and then adjusted to 37°C to 38°C, and the chocolate was used for coating almonds. The lactic acid bacterium-containing almond chocolate can be made by blending lactic acid bacteria powder together with 0 to 45% by weight of sugar, 0 to 20% by weight of whole milk powder, 0 to 70% by weight of cacao mass, 0 to 25% by weight of cocoa butter, and 0 to 20% by weight of vegetable fat or oil, these amounts being appropriately changed within the above range. In addition, auxiliary materials such as emulsifiers and flavors may be added as appropriate, and the blending amounts thereof may be appropriately adjusted. Further, 0 to 15% by weight of dietary fiber and 0 to 10% by weight of oligosaccharide may be blended. The type of the center material is not limited to almonds but may be appropriately changed, and the amount of the center material to be blended may be appropriately adjusted.

[Table 10]

|  | % by weight |
|---|---|
| Sugar | 32 |
| Almond | 25 |
| Whole milk powder | 15 |
| Cacao mass | 14 |
| Cocoa butter | 8 |
| Vegetable fat or oil | 5 |
| Brightener | 0.5 |
| Emulsifier | 0.4 |
| Flavor | 0.1 |
| Lactic acid bacteria powder | 0.4 |
| Total | 100 |

2. Time Course Test on Number of Viable Lactic Acid Bacteria in Lactic Acid Bacterium-Containing Almond Chocolate

Regarding the produced lactic acid bacterium-containing almond chocolate, as with a time course test on the number of viable lactic acid bacteria in the lactic acid bacterium-containing chocolate in Example 1, the number of viable lactic acid bacteria in a sample of lactic acid bacterium-containing almond chocolate immediately after manufacturing or after stored at room temperature (about 18°C) for 3 months to 7 months was examined. The results are shown in Table 11 below. It was found that the bacteria in the lactic acid bacterium-containing almond chocolate could be maintained in an extremely stable and living state.

[Table 11]

|  | Immediately after manufacturing | After 3 months | After 5 months | After 7 months |
|---|---|---|---|---|
| Number of viable bacteria (CFU/g) | 3.70E+07 | 2.20E+07 | 8.10E+06 | 6.00E+06 |

3. Resistance Test of Lactic Acid Bacterium-Containing Almond Chocolate Against Artificial Gastric Juice

A resistance test of the produced lactic acid bacterium-containing almond chocolate against artificial gastric juice was carried out in the same manner as in Example 1. The results are shown in Table 12 below. Also, experiments were carried out similarly for lactic acid bacteria powder as a control. It was found that the resistance of the lactic acid bacteria in the lactic acid bacterium-containing almond chocolate against artificial gastric juice was much higher when compared to the lactic acid bacteria powder.

[Table 12]

|  | At the time of addition | After 30 minutes | After 1 hour | After 2 hours |
|---|---|---|---|---|
| Lactic acid bacterium-containing almond chocolate | 2.62E+08 | 9.60E+07 | 8.10E+07 | 9.60E+07 |
| Lactic acid bacteria powder | 2.94E+08 | 3.84E+04 | 1.14E+04 | 0.00E+00 |

Example 4 Lactic Acid Bacterium-Containing Sugarless Chocolate

In this example, a sugarless chocolate containing lactic acid bacteria was produced with the formulation shown in Table 13 below according to Manufacturing Method 2.

[Table 13]

|  | % by weight |
|---|---|
| Sugar alcohol | 34 |
| Cacao mass | 31 |
| Milk powder | 16 |
| Vegetable fat or oil | 16 |
| Cocoa butter | 2 |
| Emulsifier | 0.5 |
| Flavor | 0.2 |
| High sweetness sweetener | 0.1 |
| Lactic acid bacteria powder | 0.5 |
| Total | 100 |

A time course test as well as in a resistance test of lactic acid bacteria in the lactic acid bacterium-containing sugarless chocolate against artificial gastric juice showed almost the same stability over time and the same resistance against artificial gastric juice as in Example 1.

The lactic acid bacterium-containing sugarless chocolate can be made by blending lactic acid bacteria powder with 0 to 50% by weight of sugar alcohol, 0 to 70% by weight of cacao mass, 0 to 25% by weight of milk powder, 0 to 25% by weight of vegetable fat or oil, and 0 to 25% by weight of cocoa butter, these amounts being appropriately changed within the above range. In addition, secondary raw materials such as high sweetness sweeteners, emulsifiers, flavors and the like may be appropriately added, and the blending amounts thereof may also be appropriately adjusted. Furthermore, 0 to 15% by weight of dietary fiber and 0 to 10% by weight of oligosaccharide may be blended. The oligosaccharides that may be used include, but are not limited to, fructooligosaccharide, galacto-oligosaccharide, isomalto-oligosaccharide, soybean oligosaccharide, and the like.

Example 5 Lactic Acid Bacterium-Containing Fat or oil Composition

1. Manufacturing of Lactic Acid Bacterium-Containing Fat or oil Composition

A lactic acid bacterium-containing fat or oil composition was prepared using the Labre bacteria powder prepared in the same manner as in Example 1. The blending amounts are as shown in Table 14 below. The outline of the manufacturing method is shown in Fig. 3. This lactic acid bacterium-containing fat or oil composition is in a solid state at around normal temperature (25°C), but becomes a liquid at around human body temperature (35°C to 40°C) and has physical properties like a hand cream.

The lactic acid bacterium-containing fat or oil composition can be made by blending lactic acid bacteria powder with 0 to 80% by weight of sugar, 20 to 99% by weight of vegetable fat or oil, 0 to 40% by weight of whole milk powder and 0 to 20% by weight of lactose, these amounts being appropriately changed within the above range. In addition, secondary raw materials such as high sweetness sweeteners, emulsifiers, flavors and the like may be appropriately added, and the blending amounts thereof may also be appropriately adjusted. Furthermore, 0 to 15% by weight of dietary fiber and 0 to 10% by weight of oligosaccharide may be blended. The lactic acid bacterium-containing fat or oil composition is a white chocolate composition or a similar composition to white chocolate, and can be used as a coating or as a material for topping on foods such as baked confectionery and chocolates, or as a material for decoration, and the like, but the composition is not limited to these applications.

[Table 14]

|  | % by weight |
|---|---|
| Sugar | 40 |
| Vegetable fat or oil | 34 |
| Whole milk powder | 19 |
| Lactose | 7 |
| Lactic acid bacteria powder | 0.5 |
| Total | 100 |

2. Time Course Test on Number of Viable Lactic Acid Bacteria in Lactic Acid Bacterium-Containing Fat or oil Composition

Regarding the produced lactic acid bacterium-containing fat or oil composition, as with a time course test on the number of viable lactic acid bacteria in the lactic acid bacterium-containing chocolate in Example 1, the number of viable lactic acid bacteria in a sample of lactic acid bacterium-containing fat or oil composition immediately after manufacturing or after stored at room temperature (about 25°C) for 1 month to 2 months was examined. The results are shown in Table 15 below. It was found that the bacteria in the lactic acid bacterium-containing fat or oil composition can be maintained in an extremely stable and living state.

[Table 15]

|  | Immediately after manufacturing | After 1 month | After 2 months |
|---|---|---|---|
| Number of viable bacteria (CFU/g) | 4.48E+07 | 4.36E+07 | 4.32E+07 |

3. Resistance Test of Lactic Acid Bacterium-Containing Fat or oil Composition against Artificial Gastric Juice

A resistance test of the produced lactic acid bacterium-containing fat or oil composition against artificial gastric juice was carried out in the same manner as in Example 1. The results are shown in Table 16 below. Also, experiments were carried out similarly for the lactic acid bacteria powder as a control. It was found that the resistance of the lactic acid bacteria in the lactic acid bacterium-containing fat or oil composition against artificial gastric juice was much higher compared to the lactic acid bacteria powder.

[Table 16]

|  | At the time of addition | After 30 minutes | After 1 hour | After 2 hours |
|---|---|---|---|---|
| Lactic acid bacterium-containing fat or oil composition | 2.10E+08 | 2.55E+07 | 2.46E+07 | 3.45E+07 |
| Lactic acid bacteria powder | 2.29E+08 | 5.46E+05 | 3.63E+04 | 0.00E+00 |

This application claims the benefits of and priority to Japanese Patent Application No. 2015-111706, filed on June 1, 2015, which is incorporated herein by reference in its entirety.

**Claims**

1. A lactic acid bacterium-containing fat or oil composition containing a viable lactic acid bacterium.

2. The lactic acid bacterium-containing fat or oil composition according to claim 1, wherein the lactic acid bacterium is one or more kinds selected from the group consisting of Lactobacillus, Enterococcus, Bifidobacterium, Leuconostoc, Streptococcus, Lactococcus, and Pediococcus.

3. The lactic acid bacterium-containing fat or oil composition according to claim 1 or 2, wherein the lactic acid bacterium is one or more kinds selected from the group consisting of Lactobacillus, Enterococcus, Bifidobacterium, and Leuconostoc.

4. The lactic acid bacterium-containing fat or oil composition according to any one of claims 1 to 3, which contains from $1 \times 10^4$ lactic acid bacteria/g to $1 \times 10^{12}$ lactic acid bacteria/g.

5. The lactic acid bacterium-containing fat or oil composition according to any one of claims 1 to 4, which contains from $1 \times 10^6$ lactic acid bacteria/g to $1 \times 10^{12}$ lactic acid bacteria/g.

6. The lactic acid bacterium-containing fat or oil composition according to any one of claims 1 to 5, wherein the fat or oil composition is a chocolate.

7. The lactic acid bacterium-containing fat or oil composition according to any one of claims 1 to 6, further comprising a center material.

8. The lactic acid bacterium-containing fat or oil composition according to claim 7, wherein the center material is an almond.

9. The lactic acid bacterium-containing fat or oil composition according to any one of claims 1 to 8, wherein a viable lactic acid bacterium is delivered to the intestine.

10. A food containing the lactic acid bacterium-containing fat or oil composition according to any one of claims 1 to 8.

11. A food for delivering a viable lactic acid bacterium to the intestine, comprising the lactic acid bacterium-containing fat or oil composition according to any one of claims 1 to 8.

12. A method for manufacturing a lactic acid bacterium-containing chocolate, the method comprising adding lactic acid bacteria powder to a chocolate dough after tempering and before molding.

13. The method for manufacturing a lactic acid bacterium-containing chocolate according to claim 12, wherein the temperature of the chocolate dough is from 27°C to 31°C when the lactic acid bacteria powder is added.

14. The method for manufacturing a lactic acid bacterium-containing chocolate according to claim 13, wherein the temperature of the chocolate dough is from 28°C to 30°C when the lactic acid bacteria powder is added.

15. A method for manufacturing a lactic acid bacterium-containing chocolate, the method comprising mixing a high concentration of lactic acid bacteria powder with a chocolate to manufacture a chocolate with a high lactic acid bacterium concentration, and adding the chocolate with a high lactic acid bacterium concentration to a chocolate dough after tempering and before molding.

16. The method for manufacturing a lactic acid bacterium-containing chocolate according to claim 15, wherein the temperature of the chocolate dough after tempering and before molding is from 27°C to 31°C when the chocolate with a high lactic acid bacterium concentration is added.

17. The method for manufacturing a lactic acid bacterium-containing chocolate according to claim 16, wherein the temperature of the chocolate dough after tempering and before molding is from 28°C to 30°C when the chocolate with a high lactic acid bacterium concentration is added.

18. A method for manufacturing a center material-coated lactic acid bacterium-containing chocolate, wherein a center material is coated with a chocolate dough prepared by adding lactic acid bacteria powder to the chocolate dough that has been adjusted to from 35°C to 40°C.

EP 3 305 086 A1

# FIG. 1

**CONVENTIONAL METHOD**

LACTIC ACID BACTERIA POWDER ▼

MIXING OF RAW MATERIALS → ATOMIZATION → CONCHING AT 70°C TO 80°C → CHOCOLATE DOUGH → STORAGE IN TANK   45°C TO 50°C   ABOUT 4 DAYS ON AVERAGE

→ TEMPERING → MOLDING → DEMOLDING → PACKAGING

**MANUFACTURING METHOD 1**

MIXING OF RAW MATERIALS → ATOMIZATION → CONCHING AT 70°C TO 80°C → CHOCOLATE DOUGH → STORAGE IN TANK   45°C TO 50°C   ABOUT 4 DAYS ON AVERAGE

LACTIC ACID BACTERIA POWDER ▼

→ TEMPERING → MIXING AT 27°C TO 31°C → MOLDING → DEMOLDING → PACKAGING

**MANUFACTURING METHOD 2**

MIXING OF RAW MATERIALS → ATOMIZATION → CONCHING AT 70°C TO 80°C → CHOCOLATE DOUGH → STORAGE IN TANK   45°C TO 50°C   ABOUT 4 DAYS ON AVERAGE

LACTIC ACID BACTERIA POWDER

CHOCOLATE DOUGH → MELT AT ABOUT 40°C → CHOCOLATE CONTAINING A HIGH LACTIC ACID BACTERIUM CONCENTRATION   MIX APPROXIMATELY 10wt% CHOCOLATE CONTAINING A HIGH LACTIC ACID BACTERIUM CONCENTRATION WITH A TEMPERED CHOCOLATE DOUGH

→ TEMPERING → MIXING AT 27°C TO 31°C → MOLDING → DEMOLDING → PACKAGING

16

## FIG. 2

```
        LACTIC ACID
      BACTERIA POWDER
              ▼
              ↓
CHOCOLATE → MIXING → COATING ALMOND → GLAZING → PACKAGING
  DOUGH               WITH CHOCOLATE
42°C TO 43°C  37°C TO 38°C
```

## FIG. 3

```
MIXING OF RAW → ATOMIZATION → CONCHING AT → FAT OR OIL → STORAGE   45°C TO 50°C
  MATERIALS                   40°C TO 50°C   COMPOSITION DOUGH   IN TANK   ABOUT 4 DAYS ON AVERAGE

                        LACTIC ACID BACTERIA POWDER              MIX APPROXIMATELY 10wt% FAT OR OIL
                                  ▼                              COMPOSITION CONTAINING A HIGH LACTIC
FAT OR OIL → MELT → FAT OR OIL COMPOSITION CONTAINING A HIGH     ACID BACTERIA CONCENTRATION WITH
COMPOSITION DOUGH  AT ABOUT 40°C  LACTIC ACID BACTERIUM CONCENTRATION   A TEMPERED FAT OR OIL COMPOSITION

         → TEMPERING → MIXING AT → MOLDING → DEMOLDING → PACKAGING
                       27°C TO 31°C
```

## FIG. 4A

EXPERIMENT ON DAY 1

## FIG. 4B

EXPERIMENT ON DAY 2

## FIG. 4C

EXPERIMENT ON DAY 3

FIG. 5

## INTERNATIONAL SEARCH REPORT

| International application No. |
| --- |
| PCT/JP2016/002626 |

**A. CLASSIFICATION OF SUBJECT MATTER**
*A23G1/00*(2006.01)i, *A23G1/30*(2006.01)i, *A23L33/10*(2016.01)i

According to International Patent Classification (IPC) or to both national classification and IPC

**B. FIELDS SEARCHED**

Minimum documentation searched (classification system followed by classification symbols)
A23G1/00, A23G1/30, A23L33/10

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)
CAplus/FROSTI/FSTA(STN), JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | LALICIC-PETRONIJEVIC J. et al., Viability of probiotic strains Lactobacillus acidophilus NGFM and Bifidobacterium lactis HN019 and their impact on sensory and rheological properties of milk and dark chocolates during storage for 180 days, J. Funct. Foods, 2015, Vol.15, pp.541-550, abstract, page 542, right column, paragraph of 'Chocolates preparation', page 542, right column, paragraph of 'Probiotics', page 543, left column, lines 15 to 20, page 545, left column, paragraph of '3.1 Viability of probiotic bacteria', fig. 1 | 1-6,9-14<br>1-18 |

☒ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 August 2016 (10.08.16) | 30 August 2016 (30.08.16) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2016/002626

C (Continuation).　DOCUMENTS CONSIDERED TO BE RELEVANT

| Category* | Citation of document, with indication, where appropriate, of the relevant passages | Relevant to claim No. |
|---|---|---|
| X<br>Y | JP 8-126473 A  (Fuji Oil Co., Ltd.),<br>21 May 1996 (21.05.1996),<br>claims 1, 11; paragraphs [0010], [0024] to<br>[0029], [0037] to [0039], [0044] to [0045],<br>[0056] to [0061]; table 2; fig. 1<br>& EP 0704164 A2<br>page 2, lines 47 to 58; page 4, lines 15 to 46;<br>page 5, lines 15 to 32; page 5, lines 45 to 54;<br>page 6, line 55 to page 8, line 32; table 2;<br>fig. 1 | 1-14,18<br>1-18 |
| Y | JP 46-18592 B1  (Nihon Shokuhin Kako Co., Ltd.),<br>24 May 1971 (24.05.1971),<br>column 3, lines 21 to 23<br>(Family: none) | 1-18 |
| Y | JP 2013-94147 A  (Tsukishima Foods Industry Co.,<br>Ltd.),<br>20 May 2013 (20.05.2013),<br>paragraph [0018]<br>(Family: none) | 1-18 |
| Y | JP 2009-504163 A  (Cadbury Adams USA L.L.C.),<br>05 February 2009 (05.02.2009),<br>paragraph [0175]<br>& WO 2007/022069 A1<br>paragraph [0143] | 1-18 |
| Y | JP 2012-29616 A  (Ogawa & Co., Ltd.),<br>16 February 2012 (16.02.2012),<br>paragraph [0043]<br>(Family: none) | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H08126473 B
- JP S56002908 B
- JP H04041434 B
- JP H05186335 B
- JP H11199494 B
- JP 2002505251 A
- JP 2001064189 A
- JP 2015111706 A

### Non-patent literature cited in the description

- *Nippon Shokuhin Kagaku Kogaku Kaishi,* 2001, vol. 48 (9), 656-663